(19) Europäisches Patentamt
European Patent Office
Office européen des brevets

(11) **EP 2 600 659 B1**

(12) **EUROPEAN PATENT SPECIFICATION**

(45) Date of publication and mention
of the grant of the patent:
**28.08.2019 Bulletin 2019/35**

(21) Application number: **11811766.2**

(22) Date of filing: **17.05.2011**

(51) Int Cl.:
*H04W 52/02* $^{(2009.01)}$    *H04W 68/02* $^{(2009.01)}$

(86) International application number:
**PCT/CN2011/074191**

(87) International publication number:
**WO 2012/013064 (02.02.2012 Gazette 2012/05)**

(54) **METHOD AND APPARATUS FOR TRANSMITTING PAGING INDICATOR CHANNEL FRAME**

VERFAHREN UND VORRICHTUNG ZUR ÜBERTRAGUNG VON PAGING-INDIKATOR-KANALRAHMEN

PROCÉDÉ ET APPAREIL DE TRANSMISSION DE TRAMES DE CANAL INDICATEUR DE RECHERCHE DE MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2010 CN 201010245155**

(43) Date of publication of application:
**05.06.2013 Bulletin 2013/23**

(73) Proprietor: **ZTE Corporation**
**Shenzhen, Guangdong 518057 (CN)**

(72) Inventor: **YU, Qingqi**
**Guangdong 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
EP-A1- 1 347 657          EP-A1- 1 389 836
CN-A- 1 398 074           CN-A- 1 608 349
KR-A- 20040 036 966       US-A1- 2010 079 244

EP 2 600 659 B1

**Description**

**Field of the Invention**

The present invention relates to the communication field, and in particular to a method and an apparatus for transmitting a PICH (Paging Indicator Channel) frame.

**Background of the invention**

The principle of enabling UE to be paged by 3GPP is:
The Paging Indicator Channel (PICH) is defined, and the paging indicator information with respect to a UE is carried by the PICH. Thus, it is not required for a UE to demodulate the Paging Channel (PCH) in real time, but only to monitor the message of a specified position of the PICH according to a specified period. By that, the UE will know whether it is being paged at present, and then the UE can decide whether to demodulate the PCH, therefore the purpose for saving the electricity consumption of the UE is achieved.

There are 288 bits in each frame for carrying the Paging Indicator (PI), and the number of PIs, Np, which can be carried simultaneously, equals to 18, 36, 72, 144.

In a commercial system, Np is typically configured to be 18 or 36. In a PICH frame, the number of bits occupied by each user is 288/Np.

For example, when Np = 144, each user occupies 2 bits.

For example, when Np = 18, each user occupies 16bits.

According to the 3GPP protocol requirements, the bits occupied by each user must be transmitted as all Os or all 1s; if a user is not being paged, all Os are transmitted;

UE may periodically (the typical period is 640 ms) check the corresponding position of the PICH, to see whether the demodulated bit equals to 1, if so, the UE will consider itself being paged at present, and it will demodulate the PCH channel to confirm whether itself is really paged. If the checked bit of the corresponding position of the PICH does not equal to 1, the UE will consider itself not being paged, and there is no need to demodulate the PCH.

There are following problems in the present PICH processing of 3GPP:
As to the PICH frame format defined in 3GPP, even there is no paging, the corresponding bits of the PICH are also transmitted as all Os, and the power used is as same as that of transmitting these bits as all 1s when there is paging. In fact, less power can be used when there is no paging, and the false detection of PICH with a certain probability is allowed.

The lower limit of the PICH power defined in 3GPP is -10 db, and such limitations are too strict when Np = 18 or Np = 36.

Table 1 shows a power configuration of a common channel in a typical commercial cell.

Table 1

| Channel Type | Quantity | Power (db) | Duty Cycle | Converted into W |
|--------------|----------|------------|------------|------------------|
| PCPICH | 1 | 33dbm | 1 | 2.000 |
| PCCPCH | 1 | -3 | 0.9 | 0.900 |
| PICH | 1 | -7 | 0.96 | 0.382 |
| PSCH | 1 | -5 | 0.1 | 0.063 |
| SSCH | 1 | -5 | 0.1 | 0.063 |
| | | | Total Power (W): | 3.408 |

According to the above typical configuration of a common channel, the PICH power occupies 11.3% of the no-load total power.

In a commercial network, a typical configuration of Np is 18, thus each user can be assigned 16 bits in each PICH frame. If a certain UE is not paged, the 16 bits corresponding to the UE will be transmitted as all Os. But that is a waste of power. In addition, the waste of PICH power also increases the downlink interference in the cell, thus Ec/Io of a primary common pilot channel in the cell is deteriorated.

At present, various domestic and abroad equipment suppliers strictly follow the limitation of PICH power in 3GPP, and the situations that there is paging and there is no paging are not treated differently, thus the transmission power consumption of a base station is increased.

Document EP 1 347 657 A1 discloses a transmission method for a paging indicator in which, when the indication bits indicate that the user equipment has paging information, signals are transmitted; and when the user equipment has no paging information, the corresponding paging indication bits are set to 0, and the transmission of the signals are closed off.

**Summary of the invention**

The present invention is provided in view of the problem in the traditional art that the power consumption of a base station is too large when transmitting a PICH frame, therefore, the present invention provides a method and an apparatus for transmitting a PICH frame, to solve at least one of above mentioned problems.

According to one aspect of the present invention, a method for transmitting a Paging Indicator Channel (PICH) frame is provided according to claim 1.

Setting the transmission power of the first type of PICH frame, by the base station, to be greater than the transmission power of the second type of PICH frame comprises: acquiring, by the base station, a PICH transmission power from a Node B Application Part (NBAP) message, and acquiring an offset value of the PICH transmission power from a default value configured or preset in background; setting, by the base station, the transmission power of the first type of PICH frame to be the acquired PICH transmission power, and setting the transmission power of the second type of PICH frame to be the difference between the transmission power of the first type of PICH frame and the offset value.

The value range of the offset value is 0 db to 10 db.

Using, by the base station, the set transmission power of the first type of PICH frame to transmit the first type of PICH frame, or using the set transmission power of the second type of PICH frame to transmit the second type of PICH frame comprises: judging, by the base station, whether a Paging Channel (PCH) data frame is received; if the PCH data frame is received, Paging Indicator (PI) bitmap information in the PCH data frame is acquired; if not all bits in the PI bitmap information equal to 0, the set transmission power of the first type of PICH frame is used to transmit the first type of PICH frame, otherwise, the set transmission power of the second type of PICH frame is used to transmit the second type of PICH frame.

After the step of the base station judging whether the PCH data frame is received, the method for transmitting a PICH frame further comprises: if the PCH data frame is not received, the set transmission power of the second type of PICH frame is used to transmit the second type of PICH frame.

Judging, by the base station, whether the PCH data frame is received comprises: the step of judging whether the PCH data frame is received is performed at a preset interval.

According to another aspect of the present invention, an apparatus for transmitting a Paging Indicator Channel (PICH) frame is provided according to claim 7.

The setting unit comprises: an acquiring module, which is configured to acquire a PICH transmission power from a Node B Application Part (NBAP) message, and acquire an offset value of the PICH transmission power from the default value configured or preset in background; a setting module, which is configured to set the transmission power of the first type of PICH frame to be the acquired PICH transmission power, and set the transmission power of the second type of PICH frame to be the difference between the transmission power of the first type of PICH frame and the offset value.

The transmitting unit comprises: a judging module, which is configured to judge whether a Paging Channel (PCH) data frame is received; an acquiring module, which is configured to acquire Paging Indicator (PI) bitmap information in the PCH data frame; a transmitting module, which is configured to use the set transmission power of the first type of PICH frame to transmit the first type of PICH frame when not all bits in the PI bitmap information equal to 0, and use the set transmission power of the second type of PICH frame to transmit the second type of PICH frame when all bits in the PI bitmap information equal to 0.

The transmitting module further comprises a notification module, which is configured to notify the transmitting module to use the set transmission power of the second type of PICH frame to transmit the second type of PICH frame when the PCH data frame is not received.

By reducing the transmission power of PICH when there is no paging, the present invention can reduce power consumption of a base station, optimize Ec/Io of a primary common pilot channel in a cell, thus the problem in the traditional art that the power consumption of a base station is too large when a transmitting PICH frame is solved.

Other features and advantages of the present invention will be described in the following description and partly become obvious from the description, or be understood by implementing the present invention. The objects and other advantages of the present invention can be realized and obtained through the structures indicated by the description, claims and drawings.

**Brief Description of the Drawings**

The drawings illustrated here provided a further understanding of the present invention and form a part of the present application, and the exemplary embodiments and the description thereof are used to explain the present invention without unduly limiting the scope of the present invention as defined in the appended claims.

In the drawings:

Fig. 1 is a flow chart of a method for transmitting a PICH frame according to an embodiment of the present invention;

Fig. 2 is a schematic diagram of a PICH frame format defined in 3GPP protocol;

Fig. 3 is a schematic diagram of a PICH transmission power defined in 3GPP protocol when $Np = 18$, PICH power = -7 db;

Fig. 4 is a schematic diagram of a PICH transmission power when $Np = 18$, PICH power = -7 db, Poff is 6 db according to an embodiment of the present invention;

Fig. 5 is a preferred flow chart of a method for transmitting a PICH frame according to an embodiment of the present invention; and

Fig. 6 is a structure diagram of an apparatus for transmitting a PICH frame according to an embodiment of the preset invention.

**Detailed Description of Embodiments**

The present invention will be described in detail hereinafter with reference to the drawings and in conjunction with embodiments. It needs to be noted that the embodiments of the present invention and the features in the embodiments can be combined with each other if there is no conflict.

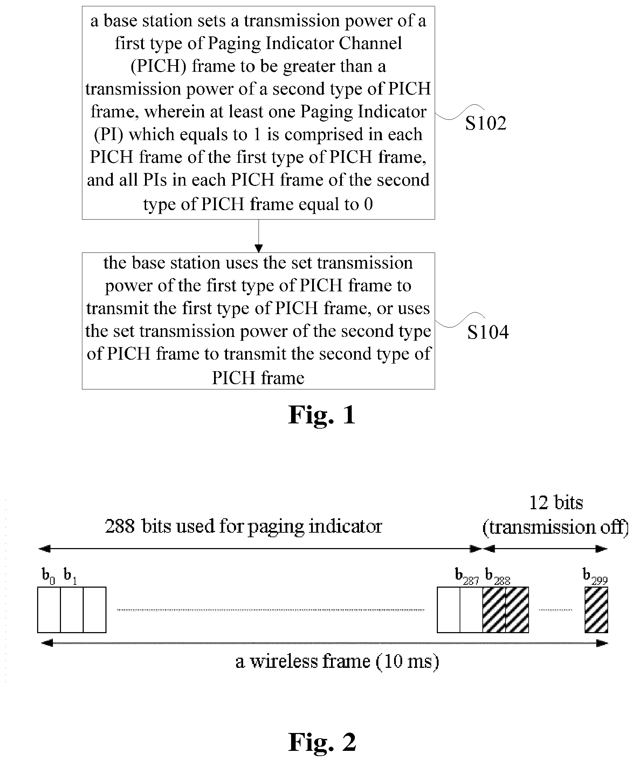

Fig. 1 is a flow chart of a method for transmitting a PICH frame according to an embodiment of the present invention, which comprises:

S102, a base station setting a transmission power of a first type of PICH frame to be greater than a transmission power of a second type of PICH frame, wherein at least one Paging Indicator (PI) which equals to 1 is comprised in each PICH frame of the first type of PICH frame, and all PIs in each PICH frame of the second type of PICH frame equal to 0; and

S104, the base station using the set transmission power of the first type of PICH frame to transmit the first type of PICH frame or using the set transmission power of the second type of PICH frame to transmit the second type of PICH frame.

In the traditional art, under the condition that there is paging and there is no paging, the base station uses the same transmission power to transmit a PICH frame, thereby the transmission power consumption of the base station is increased. By reducing the transmission power of PICH when there is no paging, the above mentioned preferred embodiment of the present invention can reduce power consumption of a base station, optimize Ec/Io of a primary common pilot channel in a cell, thus the problem in the traditional art that the power consumption of a base station is too large when transmitting a PICH frame is solved.

Preferably, setting the transmission power of the first type of PICH frame, by the base station, to be greater than the transmission power of the second type of PICH frame comprises: the base station acquiring a PICH transmission power from a NBAP (Node B Application Part) message, and acquiring a offset value of the PICH transmission power from the default value configured or preset in background; the base station setting the transmission power of the first type of PICH frame to be the acquired PICH transmission power, and setting the transmission power of the second type of PICH frame to be the difference between the transmission power of the first type of PICH frame and the offset value. By this way, the value range of the PICH transmission power when there is no paging can be controlled, and it can be less than the lower limit of the 3GPP specification, so as to be applicable for various requirements.

Preferably, the base station acquires the PICH transmission power from a common transport channel setup request message of the NBAP.

Preferably, the range of the offset value is 0 db to 10 db. Within this value range, the PICH transmission power when there is no paging can make the error rate when UE verifies the PICH of no paging in an acceptable range.

Preferably, using, by the base station, the set transmission power of the first type of PICH frame to transmit the first type of PICH frame, or using the set transmission power of the second type of PICH frame to transmit the second type of PICH frame comprises: judging, by the base station, whether a Paging Channel (PCH) data frame is received; if the PCH data frame is received, Paging Indicator (PI) bitmap information in the PCH data frame is acquired; if not all bits in said PI bitmap information equal to 0, the set transmission power of the first type of PICH frame is used to transmit the first type of PICH frame, otherwise, the set transmission power of the second type of PICH frame is used to transmit the second type of PICH frame. By the above way, various PICH frames can be transmitted according to various requirements.

Preferably, after the step of judging, by the base station, whether the PCH data frame is received, the following step is further comprised: if the PCH data frame is not received, the set transmission power of the second type of PICH frame is used to transmit the second type of PICH frame. By this way, the power consumption of the base station can be reduced in default.

Preferably, judging, by the base station, whether the PCH data frame is received comprises: the step of judging whether the PCH data frame is received is performed at a preset interval. By this way, the mode for transmitting the PICH frame can be determined with a lower system overhead.

The present invention will be described below in detail hereinafter according the drawings and embodiments. Those skilled in the art can easily implement the present invention according to the following descriptions.

Fig. 2 shows the PICH frame format defined in 3GPP TS 25.211 protocol. The length of a PICH wireless frame is 10 ms, which includes 300 bits, and the front 288 bits are used for carrying Paging Indicator, the rear 12 bits are set to be transmission off. The number of PIs, $N_p$, which can be carried simultaneously, equals to 18, 36, 72, 144.

If $N_p$ = 18, the number of bits for carrying each PI is 288/$N_p$ = 16 bits.

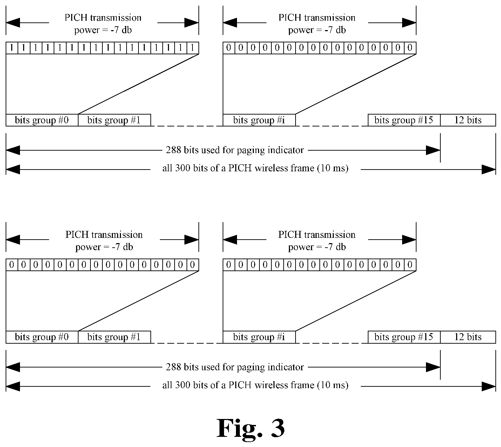

Fig. 3 shows an example of the PICH transmission power according to the 3GPP protocol specification, assuming $N_p$ = 18, PICH power = -7 db. In this example, the length of each Bits Group is defined as: 288/$N_p$ = 16 bits.

No matter whether the PICH frame is transmitted as all Os or part of Bits Group are transmitted as 1s, each Bits Group is transmitted using the PICH power = -7 db.

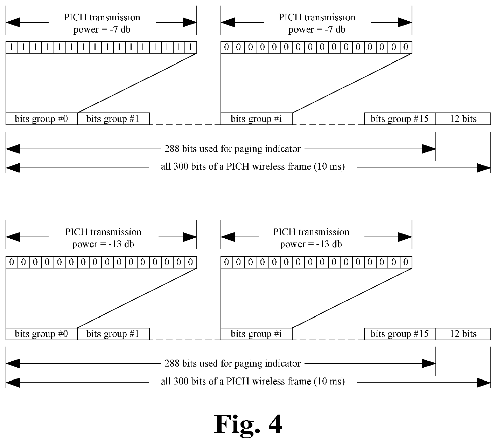

Fig. 4 shows an example of the PICH transmission power after the present invention is applied, assuming $N_p$ = 18, PICH power = -7 db, and Poff is 6 db. In this example, the length of each Bits Group is 288/$N_p$ = 16 bits.

Preferably, each Bits Group only carries one PI.

According to the top part of the Fig. 4, the PI information carried by Bits Group #0 equals to 1, therefore, it is transmitted as all 1s, and the transmission power of the whole PICH frame is the PICH power = -7 db.

According to the bottom part of the Fig. 4, the PI information carried by each Bits Group #0 equals to 0, therefore, it is transmitted as all Os, and the transmission power of the whole PICH frame is the PICH power - Poff = -13 db.

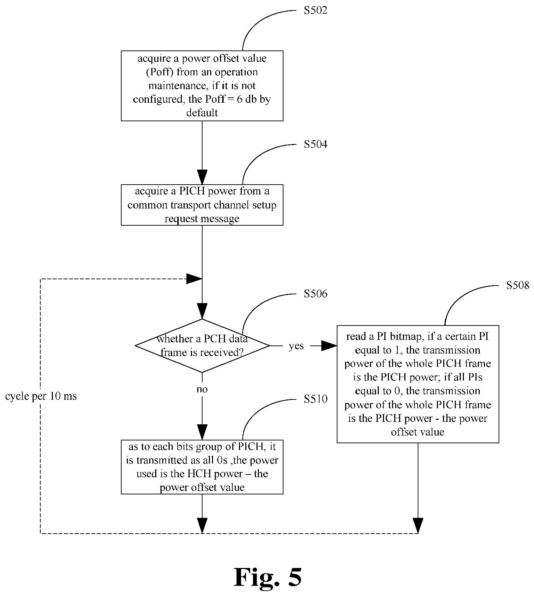

The preferred method for transmitting a PICH frame will be described hereinafter in conjunction with Fig. 5, the method comprises:

Step S502: acquiring a power offset value Poff from an operation maintenance sub-system, which means the power of transmitting PICH as all Os is lower than the power of transmitting PICH as all 1s by the Poff, and the default Poff is 6db.

Specifically, the Poff value is acquired after the base station is powered on, and the meaning of this Poff value is that when the whole PICH frame is transmitted as all Os, the transmission power is the PICH power - Poff; the value range of the Poff is 0db to 10db; If the Poff is not configured by the operation maintenance, the value of the Poff is 6db by default.

Step S504: NodeB acquiring a PICH power information through a common transport channel setup request message.

Specifically, the value of the PICH power can be acquired from the "PICH power" cell in the "common transport channel setup request" message of the NBAP message. Preferably, the value of the PICH power is limited to the range from -10db to 5db by 3GPP.

Step S506 to S510: if there is paging in the corresponding position of the PICH, it is transmitted as all 1s, and the transmission power of the frame is PICH power; if the whole PICH frame is transmitted as all Os, the power is the PICH power - Poff.

Specifically, in Step S506, it is checked whether a PICH data frame is received, if received, turn to Step S508 for processing; if not received, turn to Step S510 for processing.

Preferably, a PI bitmap is acquired in the PICH data frame. Assume that $N_p$ is 18, it means that there are 18 bits in the PI bitmap, and each bit corresponds to a PI, each PI is carried by a Bits Group, and there are 16 bits in each Bits Group.

Step S508: if a PI carried by a Bits Group equal to 1, the transmission power of the whole PICH frame is PICH power; if all PIs equal to 0, the transmission power of the whole PICH frame is the PICH power - Poff.

Step S510: the description of this step is about the processing method for PICH when there is no paging messages at present. In this case, each Bits Group is transmitted as 0, and the transmission power is the PICH power - Poff.

Preferably, the implementing process of steps S506-S510 is repeated once by each frame (10 ms).

By the above mentioned methods, the power consumption of the base station can be effectively reduced. In the typical configuration shown by the above table 1, the saving ratio for the power of downlink physical channel in a cell is as follows:

The saving of the no-load transmission power in a cell is 11.3% * (3/4) = 8.5%,

It can be seen that the power saving is relatively significant.

According to the statistics of commercial networks, the usage of PCH is only about 30%, even in the busy time, which indicates that the ratio of transmitting PICH as 0 bit is:

$$100\% - 30\% = 70\%.$$

It is indicated that using the PICH power reducing technique when there is no paging of the present invention, the power saving is in considerable amount, even in the busy time.

Under the situations that some PIs in the PICH frame are transmitted as 1s, in order to simplify the processing, it is still recommended that the whole PICH frame is transmitted using the PICH power.

By using the channel configurations in Table 1, the actual testing results under the AWGN wireless environment in a cell, and Np = 18, are shown as Table 2:

Table 2

| Np | Power of transmitting PICH as 1 | Power of transmitting PICH as 0 | RSCP | Ec/Io | Possibility that all Os are checked by the mobile phone as all 1s by mistake |
|---|---|---|---|---|---|
| 18 | -7db | -17db | -115.7dbm | -11.38db | 0.82% |
| 18 | -7db | -13db | -119.0dbm | -13.51db | 0.11% |
| 18 | -7db | -13db | -114.4dbm | -10.39db | 0.00% |
| 18 | -7db | -13db | -100.7dbm | -8.43db | 0.00% |
| 18 | -7db | -10db | -117.4dbm | -13.34db | 0.00% |

The testing results in Table 2 indicates that under a week signal condition, when there is no paging, a relatively good PICH error demodulation possibility (0.11%) can be obtained just when the PICH transmission power is -13 db. However, -13 db is already lower than -10 db which is the lower limit of the PICH power in the 3GPP specification.

A typical non-continuous checking period of PICH in a commercial network is 640 ms, and using the PICH power reducing technique when there is no paging of the present invention, even in a weak signal condition (RSCP = 119 db, Ec/Io = -13.5 db), if the possibility of demodulating the PCH due to false detection of the PICH by a UE is 0.11%, it means that the PCH may only be demodulated by mistake every 519 seconds.

In the above, 0.64/0.11% = 519 seconds.

The TTI of the PCH is 10 ms, and by counting the typical stand-by time of each UE as 4 days, the total time for demodulating PCH by mistake within 4 days is :

$$(3600 * 24 * 4 / 519) * 0.01 = 6 \text{ seconds.}$$

It is very difficult to measure the difference of the standby time of an actual tested UE.

The actual testing results indicate that the average Ec/Io of a primary common downlink pilot channel in a cell of a commercial network is improved by about 0.35 db, by using the configurations in table 1 and the PICH power reducing technique when there is no paging of the present invention, and when Np = 18. It indicates that the wireless downlink interference is optimized significantly by the present invention. By reducing the downlink interference, the power consumption of UE and NodeB can be further reduced, and the downlink coverage radius in a cell is increased.

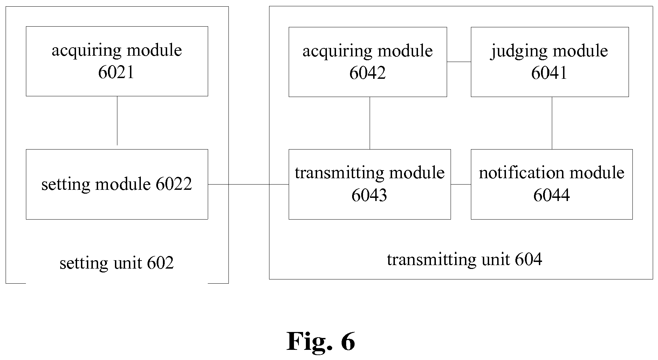

An embodiment of an apparatus for transmitting a PICH (Paging Indicator Channel) frame is further provided by the present invention, as shown in Fig. 6, the apparatus comprises: a setting unit 602, which is configured to set a transmission power of a first type of PICH frame to be greater than a transmission power of a second type of PICH frame, wherein at least one Paging Indicator (PI) which equals to 1 is comprised in each PICH frame of the first type of PICH frame, and all PIs in each PICH frame of the second type of PICH frame equal to 0; a transmitting unit 604 connected with the setting unit 602, which is configured to use the set transmission power of the first type of PICH frame to transmit the first type of PICH frame, or use the set transmission power of the second type of PICH frame to transmit the second type of PICH frame.

By reducing the transmission power of PICH when there is no paging, the above mentioned preferred embodiment of the present invention can reduce electricity consumption of a base station, optimize Ec/Io of a primary common pilot channel in a cell, thus the problem in the traditional art that the power consumption of a base station is too large when transmitting a PICH frame is solved.

Preferably, the setting unit 602 comprises: an acquiring module 6021, which is configured to acquire a PICH transmission power from a NBAP message, and acquire an offset value of the PICH transmission power from the default value configured or preset in background; a setting module 6022 connected with the acquiring module 6021, which is configured to set the transmission power of the first type of PICH frame to be the acquired PICH transmission power, and set the transmission power of the second type of PICH frame to be the difference between the transmission power of the first type of PICH frame and the offset value. By this way, the value range of the PICH transmission power when there is no paging can be controlled, and it can be less than the lower limit of the 3GPP specification, so as to meet various requirements.

Preferably, the range of the offset value is 0 db to 10 db. Within this value range, the PICH transmission power when there is no paging can make the error rate when UE verifies the PICH of no paging in an acceptable range.

Preferably, the transmitting unit 604 comprises: a judging module 6041, which is configured to judge whether a PCH data frame is received; an acquiring module 6042 connected with the judging module 6041, which is configured to acquire PI bitmap information from the PCH data frame; a transmitting module 6043 connected with the acquiring module 6042 and the setting module 6022, which is configured to use the set transmission power of the first type of PICH frame to transmit the first type of PICH frame when not all bits in the PI bitmap information equal to 0, and use the set transmission power of the second type of PICH frame to transmit the second type of PICH frame when all bits in the PI bitmap information equal to 0. By the above way, various PICH frames can be transmitted according to various requirements.

Preferably, the transmitting unit 604 further comprises: a notification module 6044 connected with the judging module 6041 and the transmitting module 6043, which is configured to notify the transmitting module 6043 to use the set transmission power of the second type of PICH frame to transmit the second type of PICH frame. By this way, the power consumption of the base station can be reduced in default.

It should be noted that the steps shown in the flow charts of the drawings can be executed in a computer system as a set of computer executable instructions, and although the logical order is shown in the flow charts, the steps shown or described here can be executed in an order different from this in some circumstances.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device. Consequently, they can be stored in the storage device and executed by the calculating device, or they are made into integrated circuit module respectively, or a plurality of modules or steps thereof are made into one integrated circuit module. In this way, the present invention is not limited to the combination of any specific hardware and software.

The descriptions above are only the preferable embodiment of the present invention, which are not used to restrict the present as defined in the appended claims.

## Claims

1. A method for transmitting a Paging Indicator Channel, PICH, frame, **characterized in that** the method comprises:

   Setting, by a base station, a transmission power of a first type of PICH frame to be greater than a transmission power of a second type of PICH frame, wherein at least one Paging Indicator, PI, which equals to 1 is comprised in each PICH frame of the first type of PICH frame, and all PIs in each PICH frame of the second type of PICH frame equal to 0 (S102);
   when the first type of PICH frame is received at the base station, using, by the base station, the set transmission power of the first type of PICH frame to transmit the first type of PICH frame; and
   when the second type of PICH frame is received at the base station, using, by the base station, the set transmission power of the second type of PICH frame to transmit the second type of PICH frame (S104).

2. The method according to Claim 1, **characterized in that** setting, by the base station, the transmission power of the first type of PICH frame to be greater than the transmission power of the second type of PICH frame comprises:

   acquiring, by the base station, a PICH transmission power from a Node B Application Part, NBAP, message, and acquiring an offset value of the PICH transmission power from a default value configured or preset in background;
   setting, by the base station, the transmission power of the first type of PICH frame to be the acquired transmission power of PICH, and setting the transmission power of the second type of PICH frame to be the difference between the transmission power of the first type of PICH frame and the offset value.

3. The method according to Claim 2, **characterized in that** the value range of the offset value is 0 db to 10 db.

4. The method according to Claim 1, **characterized in that** when the first type of PICH frame is received at the base station, using, by the base station, the set transmission power of the first type of PICH frame to transmit the first type of PICH frame, and when the second type of PICH frame is received at the base station, using, by the base station, the set transmission power of the second type of PICH frame to transmit the second type of PICH frame comprises:

   judging, by the base station, whether a Paging Channel, PCH, data frame is received;
   if a PCH data frame is received, acquiring Paging Indicator, PI, bitmap information in the PCH data frame;
   if not all bits in the PI bitmap information equal to 0, using the set transmission power of the first type of PICH frame to transmit the first type of PICH frame, otherwise, using the set transmission power of the second type of PICH frame to transmit the second type of PICH frame.

5. The method according to Claim 4, **characterized in that** after the step of judging, by the base station, whether the PCH data frame is received, the method further comprises:
   if the PCH data frame is not received, using, by the base station, the set transmission power of the second type of PICH frame to transmit the second type of PICH frame.

6. The method according to Claim 4, **characterized in that** judging, by the base station, whether the PCH data frame is received comprises: a step of judging whether the PCH data frame is received at a preset interval.

7. An apparatus for transmitting a Paging Indicator Channel, PICH, frames, located in a base station, **characterized in that** the apparatus comprises:

   a setting unit (602), configured to set a transmission power of a first type of PICH frame to be greater than a transmission power of a second type of PICH frame, wherein at least one Paging Indicator, PI, which equals to 1 is comprised in each PICH frame of the first type of PICH frame, and all PIs in each PICH frame of the second type of PICH frame equal to 0;
   a transmitting unit (604), configured to use the set transmission power of the first type of PICH frame to transmit the first type of PICH frame when the first type of PICH frame is received at the base station; and to use the set transmission power of the second type of PICH frame to transmit the second type of PICH frame when the second type of PICH frame is received at the base station.

8. The apparatus according to Claim 7, **characterized in that** the setting unit (602) comprises:

   an acquiring module (6021), configured to acquire a transmission power of PICH from a NBAP message, and acquire a offset value of the transmission power of PICH from a default value configured or preset in background;
   a setting module (6022), configured to set the transmission power of the first type of PICH frame to be the acquired transmission power of PICH, and set the transmission power of the second type of PICH frame to be the difference between the transmission power of the first type of PICH frame and the offset value.

9. The apparatus according to Claim 7, **characterized in that** the transmitting unit (604) comprises:

   a judging module (6041), configured to judge whether a Paging Channel, PCH, data frame is received;
   an acquiring module (6042), configured to acquire Paging Indicator, PI, bitmap information in the PCH data frame;
   a transmitting module (6043), configured to use the set transmission power of the first type of PICH frame to transmit the first type of PICH frame when not all bits in the PI bitmap information equal to 0, and use the set transmission power of the second type of PICH frame to transmit the second type of PICH frame when all bits in the PI bitmap information equal to 0.

10. The apparatus according to Claim 9, **characterized in that** the transmitting unit (604) further comprises:
    a notification module (6044), configured to notify the transmitting module to use the set transmission power of the second type of PICH frame to transmit the second type of PICH frame when the PCH data frame is not received.

**Patentansprüche**

1. Verfahren zum Übertragen eines Paging Indicator Channel-, PICH, Frames, **dadurch gekennzeichnet, dass** das Verfahren umfasst:

Einstellen, durch eine Basisstation, einer Übertragungsleistung eines ersten PICH-Frame-Typs so, dass sie größer ist als eine Übertragungsleistung eines zweiten PICH-Frame-Typs, wobei mindestens ein Paging Indicator, PI, der gleich 1 ist, in jedem PICH-Frame des ersten PICH-Frame-Typs umfasst ist, und alle PIs in jedem PICH-Frame des zweiten PICH-Frame-Typs gleich 0 sind (S102) ;
wenn der erste PICH-Frame-Typ an der Basisstation empfangen wird, Verwenden, durch die Basisstation, der eingestellten Übertragungsleistung des ersten PICH-Frame-Typs, um den ersten PICH-Frame-Typ zu übertragen; und
wenn der zweite PICH-Frame-Typ an der Basisstation empfangen wird, Verwenden, durch die Basisstation, der eingestellten Übertragungsleistung des zweiten PICH-Frame-Typs, um den zweiten PICH-Frame-Typ zu übertragen (S104).

2. Verfahren nach Anspruch 1, **dadurch gekennzeichnet, dass** das Einstellen, durch die Basisstation, der Übertragungsleistung des ersten PICH-Frame-Typs so, dass sie größer ist als die Übertragungsleistung des zweiten PICH-Frame-Typs, umfasst:

Erfassen, durch die Basisstation, einer PICH-Übertragungsleistung aus einer Node B Application Part-, NBAP, Nachricht, und Erfassen eines Versatzwertes der PICH-Übertragungsleistung aus einem Standardwert, der im Hintergrund konfiguriert oder voreingestellt ist;
Einstellen, durch die Basisstation, der Übertragungsleistung des ersten PICH-Frame-Typs so, dass sie die erfasste PICH-Übertragungsleistung ist, und Einstellen der Übertragungsleistung des zweiten PICH-Frame-Typs so, dass sie die Differenz zwischen der Übertragungsleistung des ersten PICH-Frame-Typs und dem Versatzwert ist.

3. Verfahren nach Anspruch 2, **dadurch gekennzeichnet, dass** der Wertebereich des Versatzwertes 0 db bis 10 db ist.

4. Verfahren nach Anspruch 1, **dadurch gekennzeichnet, dass** wenn der erste PICH-Frame-Typ an der Basisstation empfangen wird, das Verwenden, durch die Basisstation, der eingestellten Übertragungsleistung des ersten PICH-Frame-Typs, um den ersten PICH-Frame-Typ zu übertragen, und wenn der zweite PICH-Frame-Typ an der Basisstation empfangen wird, das Verwenden, durch die Basisstation, der eingestellten Übertragungsleistung des zweiten PICH-Frame-Typs, um den zweiten PICH-Frame-Typ zu übertragen, umfasst:

Beurteilen, durch die Basisstation, ob ein Paging Channel-, PCH, Datenframe empfangen wird;
wenn ein PCH-Datenframe empfangen wird, Erfassen von Paging Indicator-, PI, Bitmap-Informationen im PCH-Datenframe;
wenn nicht alle Bits in den PI-Bitmap-Informationen gleich 0 sind, Verwenden der eingestellten Übertragungsleistung des ersten PICH-Frame-Typs, um den ersten PICH-Frame-Typ zu übertragen, andernfalls Verwenden der eingestellten Übertragungsleistung des zweiten PICH-Frame-Typs, um den zweiten PICH-Frame-Typ zu übertragen.

5. Verfahren nach Anspruch 4, **dadurch gekennzeichnet, dass** nach dem Schritt des Beurteilens, durch die Basisstation, ob der PCH-Datenframe empfangen wird, das Verfahren weiter umfasst:
wenn der PCH-Datenframe nicht empfangen wird, Verwenden, durch die Basisstation, der eingestellten Übertragungsleistung des zweiten PICH-Frame-Typs, um den zweiten PICH-Frame-Typ zu übertragen.

6. Verfahren nach Anspruch 4, **dadurch gekennzeichnet, dass** das Beurteilen, durch die Basisstation, ob der PCH-Datenframe empfangen wird, umfasst: einen Schritt des Beurteilens, ob der PCH-Datenframe in einem voreingestellten Intervall empfangen wird.

7. Vorrichtung zum Übertragen eines Paging Indicator Channel-, PICH, Frames, der in einer Basisstation lokalisiert ist, **dadurch gekennzeichnet, dass** die Vorrichtung umfasst:

eine Einstelleinheit (602), die dazu konfiguriert ist, eine Übertragungsleistung eines ersten PICH-Frame-Typs so einzustellen, dass sie größer ist als eine Übertragungsleistung eines zweiten PICH-Frame-Typs, wobei mindestens ein Paging Indicator, PI, der gleich 1 ist, in jedem PICH-Frame des ersten PICH-Frame-Typs umfasst ist, und alle PIs in jedem PICH-Frame des zweiten PICH-Frame-Typs gleich 0 sind;
eine Übertragungseinheit (604), die dazu konfiguriert ist, die eingestellte Übertragungsleistung des ersten PICH-Frame-Typs zu verwenden, um den ersten PICH-Frame-Typ zu übertragen, wenn der erste PICH-Frame-Typ an der Basisstation empfangen wird; und die eingestellte Übertragungsleistung des zweiten PICH-Frame-Typs zu verwenden, um den zweiten PICH-Frame-Typ zu übertragen, wenn der zweite PICH-Frame-Typ an der Basisstation empfangen wird.

8. Vorrichtung nach Anspruch 7, **dadurch gekennzeichnet, dass** die Einstelleinheit (602) umfasst:

   ein Erfassungsmodul (6021), das dazu konfiguriert ist, eine PICH-Übertragungsleistung aus einer NBAP-Nachricht zu erfassen, und einen Versatzwert der PICH-Übertragungsleistung aus einem Standardwert zu erfassen, der im Hintergrund konfiguriert oder voreingestellt ist;
   ein Einstellmodul (6022), das dazu konfiguriert ist, die Übertragungsleistung des ersten PICH-Frame-Typs so einzustellen, dass sie die erfasste PICH-Übertragungsleistung ist, und die Übertragungsleistung des zweiten PICH-Frame-Typs so einzustellen, dass sie die Differenz zwischen der Übertragungsleistung des ersten PICH-Frame-Typs und dem Versatzwert ist.

9. Vorrichtung nach Anspruch 7, **dadurch gekennzeichnet, dass** die Übertragungseinheit (604) umfasst:

   ein Beurteilungsmodul (6041), das dazu konfiguriert ist, zu beurteilen, ob ein Paging Channel-, PCH, Datenframe empfangen wird;
   ein Erfassungsmodul (6042), das dazu konfiguriert ist, Paging Indicator-, PI, Bitmap-Informationen im PCH-Datenframe zu erfassen;
   ein Übertragungsmodul (6043), das dazu konfiguriert ist, die eingestellte Übertragungsleistung des ersten PICH-Frame-Typs zu verwenden, um den ersten PICH-Frame-Typ zu übertragen, wenn nicht alle Bits in den PI-Bitmap-Informationen gleich 0 sind, und die eingestellte Übertragungsleistung des zweiten PICH-Frame-Typs zu verwenden, um den zweiten PICH-Frame-Typ zu übertragen, wenn alle Bits in den PI-Bitmap-Informationen gleich 0 sind.

10. Vorrichtung nach Anspruch 9, **dadurch gekennzeichnet, dass** die Übertragungseinheit (604) weiter umfasst:
    ein Benachrichtigungsmodul (6044), das dazu konfiguriert ist, das Übertragungsmodul darüber zu benachrichtigen, die eingestellte Übertragungsleistung des zweiten PICH-Frame-Typs zu verwenden, um den zweiten PICH-Frame-Typ zu übertragen, wenn der PCH-Datenframe nicht empfangen wird.

**Revendications**

1. Procédé de transmission d'une trame de canal indicateur de téléavertissement, PICH, **caractérisé en ce que** le procédé comprend :

   le réglage, par une station de base, d'une puissance de transmission d'un premier type de trame PICH pour qu'elle soit supérieure à une puissance de transmission d'un second type de trame PICH, dans lequel au moins un indicateur de téléavertissement, PI, qui est égal à 1 est compris dans chaque trame PICH du premier type de trame PICH, et tous les PI dans chaque trame PICH du second type de trame PICH sont égaux à 0 (S102) ;
   lorsque le premier type de trame PICH est reçu au niveau de la station de base, l'utilisation, par la station de base, de la puissance de transmission réglée du premier type de trame PICH pour transmettre le premier type de trame PICH ; et
   lorsque le second type de trame PICH est reçu au niveau de la station de base, l'utilisation, par la station de base, de la puissance de transmission réglée du second type de trame PICH pour transmettre le second type de trame PICH (S104).

2. Procédé selon la revendication 1, **caractérisé en ce que** le réglage, par la station de base, de la puissance de transmission du premier type de trame PICH pour qu'elle soit supérieure à la puissance de transmission du second type de trame PICH comprend :

   l'acquisition, par la station de base, d'une puissance de transmission PICH à partir d'un message de partie d'application de noeud B, NBAP, et l'acquisition d'une valeur de décalage de la puissance de transmission PICH à partir d'une valeur par défaut configurée ou préréglée en arrière-plan ;
le réglage, par la station de base, de la puissance de transmission du premier type de trame PICH pour qu'elle soit la puissance de transmission acquise de PICH, et le réglage de la puissance de transmission du second type de trame PICH pour qu'elle soit la différence entre la puissance de transmission du premier type de trame PICH et la valeur de décalage.

3. Procédé selon la revendication 2, **caractérisé en ce que** la plage de valeurs de la valeur de décalage est de 0 db à 10 db.

4. Procédé selon la revendication 1, **caractérisé en ce que** lorsque le premier type de trame PICH est reçu au niveau de la station de base, l'utilisation, par la station de base, de la puissance de transmission réglée du premier type de trame PICH pour transmettre le premier type de trame PICH, et lorsque le second type de trame PICH est reçu au niveau de la station de base, l'utilisation, par la station de base, de la puissance de transmission réglée du second type de trame PICH pour transmettre le second type de trame PICH comprennent :

le fait d'estimer, par la station de base, si une trame de données de canal de téléavertissement, PCH, est reçue ;
si une trame de données PCH est reçue, l'acquisition d'informations de table de bits d'indicateur de téléavertissement, PI, dans la trame de données PCH ;
si tous les bits dans les informations de table de bits PI ne sont pas égaux à 0, l'utilisation de la puissance de transmission réglée du premier type de trame PICH pour transmettre le premier type de trame PICH, sinon, l'utilisation de la puissance de transmission réglée du second type de trame PICH pour transmettre le second type de trame PICH.

5. Procédé selon la revendication 4, **caractérisé en ce que**, après l'étape consistant à estimer, par la station de base, si la trame de données PCH est reçue, le procédé comprend en outre :
si la trame de données PCH n'est pas reçue, l'utilisation, par la station de base, de la puissance de transmission réglée du second type de trame PICH pour transmettre le second type de trame PICH.

6. Procédé selon la revendication 4, **caractérisé en ce que** le fait d'estimer, par la station de base, si la trame de données PCH est reçue comprend : une étape consistant à estimer si la trame de données PCH est reçue à un intervalle préréglé.

7. Appareil pour transmettre une trame de canal d'indicateur de téléavertissement, PICH, située dans une station de base, **caractérisé en ce que** l'appareil comprend :

une unité de réglage (602), configurée pour régler une puissance de transmission d'un premier type de trame PICH pour qu'elle soit supérieure à une puissance de transmission d'un second type de trame PICH, dans lequel au moins un indicateur de téléavertissement, PI, qui est égal à 1 est compris dans chaque trame PICH du premier type de trame PICH, et tous les PI dans chaque trame PICH du second type de trame PICH sont égaux à 0 ;
une unité de transmission (604), configurée pour utiliser la puissance de transmission réglée du premier type de trame PICH pour transmettre le premier type de trame PICH lorsque le premier type de trame PICH est reçu au niveau de la station de base ; et pour utiliser la puissance de transmission réglée du second type de trame PICH pour transmettre le second type de trame PICH lorsque le second type de trame PICH est reçu au niveau de la station de base.

8. Appareil selon la revendication 7, **caractérisé en ce que** l'unité de réglage (602) comprend :

un module d'acquisition (6021), configuré pour acquérir une puissance de transmission de PICH à partir d'un message NBAP, et acquérir une valeur de décalage de la puissance de transmission de PICH à partir d'une valeur par défaut configurée ou préréglée en arrière-plan ;
un module de réglage (6022), configuré pour régler la puissance de transmission du premier type de trame PICH pour qu'elle soit la puissance de transmission acquise de PICH, et régler la puissance de transmission du second type de trame PICH pour qu'elle soit la différence entre la puissance de transmission du premier type de trame PICH et la valeur de décalage.

9. Appareil selon la revendication 7, **caractérisé en ce que** l'unité de transmission (604) comprend :

un module d'estimation (6041), configuré pour estimer si une trame de données de canal de téléavertissement, PCH, est reçue ;

un module d'acquisition (6042), configuré pour acquérir des informations de table de bits d'indicateur de téléavertissement, PI, dans la trame de données PCH ;

un module de transmission (6043), configuré pour utiliser la puissance de transmission réglée du premier type de trame PICH pour transmettre le premier type de trame PICH lorsque tous les bits dans les informations de table de bits PI ne sont pas égaux à 0, et utiliser la puissance de transmission réglée du second type de trame PICH pour transmettre le second type de trame PICH lorsque tous les bits dans les informations de table de bits PI sont égaux à 0.

**10.** Appareil selon la revendication 9, **caractérisé en ce que** l'unité de transmission (604) comprend en outre :

un module de notification (6044), configuré pour notifier au module de transmission d'utiliser la puissance de transmission réglée du second type de trame PICH pour transmettre le second type de trame PICH lorsque la trame de données PCH n'est pas reçue.

a base station sets a transmission power of a
first type of Paging Indicator Channel
(PICH) frame to be greater than a
transmission power of a second type of PICH
frame, wherein at least one Paging Indicator
(PI) which equals to 1 is comprised in each
PICH frame of the first type of PICH frame,
and all PIs in each PICH frame of the second
type of PICH frame equal to 0

S102

the base station uses the set transmission
power of the first type of PICH frame to
transmit the first type of PICH frame, or uses
the set transmission power of the second type
of PICH frame to transmit the second type of
PICH frame

S104

**Fig. 1**

288 bits used for paging indicator

12 bits
(transmission off)

$b_0$ $b_1$             $b_{287}$ $b_{288}$      $b_{299}$

a wireless frame (10 ms)

**Fig. 2**

**Fig. 3**

PICH transmission
power = -7 db

| 1 | 1 | 1 | 1 | 1 | 1 | 1 | 1 | 1 | 1 | 1 | 1 | 1 | 1 | 1 | 1 |

PICH transmission
power = -7 db

| 0 | 0 | 0 | 0 | 0 | 0 | 0 | 0 | 0 | 0 | 0 | 0 | 0 | 0 | 0 | 0 |

| bits group #0 | bits group #1 | | bits group #i | | bits group #15 | 12 bits |

288 bits used for paging indicator

all 300 bits of a PICH wireless frame (10 ms)

PICH transmission
power = -13 db

| 0 | 0 | 0 | 0 | 0 | 0 | 0 | 0 | 0 | 0 | 0 | 0 | 0 | 0 | 0 | 0 |

PICH transmission
power = -13 db

| 0 | 0 | 0 | 0 | 0 | 0 | 0 | 0 | 0 | 0 | 0 | 0 | 0 | 0 | 0 | 0 |

| bits group #0 | bits group #1 | | bits group #i | | bits group #15 | 12 bits |

288 bits used for paging indicator

all 300 bits of a PICH wireless frame (10 ms)

# Fig. 4

S502

acquire a power offset value
(Poff) from an operation
maintenance, if it is not
configured, the Poff = 6 db by
default

S504

acquire a PICH power from a
common transport channel setup
request message

S506

S508

whether a PCH data
frame is received?  — yes →  read a PI bitmap, if a certain PI
equal to 1, the transmission
power of the whole PICH frame
is the PICH power; if all PIs
equal to 0, the transmission
power of the whole PICH frame
is the PICH power - the power
offset value

cycle per 10 ms

no

S510

as to each bits group of PICH, it
is transmitted as all 0s ,the power
used is the HCH power – the
power offset value

# Fig. 5

```
┌─────────────────────────────────┐   ┌──────────────────────────────────────────────┐
│  ┌───────────────────────┐      │   │  ┌──────────────────┐   ┌──────────────────┐  │
│  │  acquiring module     │      │   │  │ acquiring module │   │ judging module   │  │
│  │       6021            │      │   │  │      6042         │   │      6041        │  │
│  └───────────────────────┘      │   │  └──────────────────┘   └──────────────────┘  │
│            │                    │   │           │                      │            │
│  ┌───────────────────────┐      │   │  ┌──────────────────┐   ┌──────────────────┐  │
│  │  setting module 6022  │──────┼───┼──│transmitting module│  │notification module│ │
│  │                       │      │   │  │      6043         │   │      6044        │  │
│  └───────────────────────┘      │   │  └──────────────────┘   └──────────────────┘  │
│                                 │   │                                                │
│      setting unit 602           │   │           transmitting unit 604                │
└─────────────────────────────────┘   └──────────────────────────────────────────────┘
```

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1347657 A1